(19) **Europäisches Patentamt / European Patent Office / Office européen des brevets**

(11) **EP 1 886 562 B1**

(12) **EUROPEAN PATENT SPECIFICATION**

(45) Date of publication and mention
of the grant of the patent:
**02.09.2015 Bulletin 2015/36**

(51) Int Cl.:
**A01N 37/46** *(2006.01)*     **A01P 3/00** *(2006.01)*
**A01P 21/00** *(2006.01)*

(21) Application number: **06253565.3**

(22) Date of filing: **07.07.2006**

(54) **Method for enhancing the growth of crops, plants, or seeds, and suppression of plant diseases**

Verfahren zur Verbesserung des Erntegut-, Pflanzen- oder Saatgut-Wachstums und zur Bekämpfung von Pflanzenkrankheiten

Procédé d'amélioration de la croissance des cultures, plantes ou graines et pour lutter contre des maladies des plantes

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**13.02.2008 Bulletin 2008/07**

(73) Proprietor: **Tung Hai Biotechnology Corporation Taichung Hsien (TW)**

(72) Inventors:
• **Ho, Guan-Huei**
  **Mississauga, Ontario L5N 7Y6 (CA)**
• **Yang, Jeng**
  **Shalu,**
  **Taichung (TW)**
• **Yang, Tou-Hsiung**
  **Shalu,**
  **Taichung (TW)**

(74) Representative: **Wright, Simon Mark**
**J A Kemp**
**14 South Square**
**Gray's Inn**
**London WC1R 5JJ (GB)**

(56) References cited:
**JP-A- 2002 305 975**

• **HOPPENSACK ASTRID ET AL: "Conversion of the nitrogen content in liquid manure into biomass and polyglutamic acid by a newly isolated strain of Bacillus licheniformis." FEMS MICROBIOLOGY LETTERS, vol. 218, no. 1, 21 January 2003 (2003-01-21), pages 39-45, XP002407345 ISSN: 0378-1097**

**Description**

**TECHNICAL FIELD OF THE INVENTION**

The subject invention relates to the combined and concerted effects of moisturizing soil, water retention, solubilizing calcium and magnesium, stimulating growth of crops, plants, and seeds, and anti-phytopathogenic and/or antiviral functions of γ-polyglutamic acid ("γ-PGA," H form), its salt (a γ-polyglutamate), a γ-polyglutamate hydrogel and/or a fermentation broth comprising γ-PGA, its salt and/or γ-polyglutamate hydrogel.

**TECHNICAL BACKGROUND AND PRIOR ART**

In practical plant disease control, synthetic anti-fungal compounds are being the principal fungicides in use. Synthetic fungicides in broad-spectrum applications impose decreasing natural biological control, and hazard to wildlife, farm workers, and consumers. For many plant diseases, especially those associated with soil, a complex of pathogens may be involved, such as for bean root rot, involving Pythium sp., *Rhizoctonia solani,* and *Fusarium solani.*

At present and in the immediate future, selective use of conventional fungicides seems to be the principal manner in practical plant disease control. In general, fungicides can be used selectively with respect to the amount or frequency of application. The possibility of using both chemical and biological procedures to achieve reliable, selective control is intriguing.

Crop diseases range from that occurring infrequently to those which reach epidemic proportions. Cereal powdery mildew is frequent and severe. Black Sigatoka is a frequent and devastating disease associated with bananas. The frequency of sharp eyespot *(Rhizoctonia solani)* in temperate cereals and the highly globally valued crops suggest that the agents designed for its control may be commercially successful. It is generally accepted that Septoria and mildew diseases are associated with the most important cereal pathogens currently controlled by fungicides. There are several pathogens for which no effective fungicidal control exists but which are associated with severe crop losses. Examples are Sclerotinia in legumes, Gaeumannomyces in cereals and Fusarium in maize. Other major pathogens include *Pyricularia grisea* in rice, *Erysiphe graminis* and *Septoria tritici* in temperate cereals, *Ventura inaequalis* in top fruit, *Sclerotinia sclerotiorum* in legumes.

The most widely studied natural anti-fungal agents are phytoalexins. However, chitinases, glucannes, chitin-binding lectins, zeamatins, thionins, and ribosome-inactivating proteins are now recognized as important regulators of fungal invasion. Biotrophic pathogens invade living cells whereas necrotrophs colonize the invaded tissue.

D-Amino acids have been found as constituents of microbial cell walls (see Schleifer K. H. and Kandler O., 1972, Peptidoglycan types of bacterial cell walls and their taxonomic implications, Bacteriolo. Rev. 36:407-477), lipopeptides (see Asselineau J., 1966, The bacterial lipids, Harmann, Paris), antibiotics (see Bycroft B. W., 1969, Structural relationships in microbial peptides, Nature (London), 224:595-597), capsules, and toxins (see Hatfield G. M., 1975, Toxins of higher fungi, Lloydia, 38:36-55). It has been postulated that D-amino acids in antibiotics are formed from L-amino acids after incorporation of the latter into stereochemically labile intermediates such as cyclic dipeptides. A combined form of a dehydroamino acid derived from the corresponding L-amino acid might be converted stereospecifically *in vivo* to the D-isomer during antibiotic formation. Racemization of amino acids may proceed via an analogous mechanism.

Most of the peptide antibiotics produced by bacilli are active against gram-positive bacteria. However, some compounds exhibit activity almost exclusively upon gram-negative forms, whereas some others, such as bacillomycin and mycobacillin, are effective agents against molds and yeasts. Mycobacillin is a cyclic peptide antibiotic that contains 13 residues of 7 different amino acids (see Sengupta S., Banerjee A. B., and Bose S. K., 1971, γ-Glutamyl and D- or L-peptide linkages in mycobacillin, a cyclic peptide antibiotic, Biochem. J., 121:839-846). There are six of D-amino acids, including two of D-glutamic acids and four of D-aspartic acids, and seven other L-amino acids in the molecular structure.

Non-systemic fungicides are generally multi-site inhibitors, eliciting a response through the disruption of several biochemical processes. This is achieved through their ability to bind with chemical groups, such as thiol moieties, common to many enzymes. Materials that inhibit sterol biosynthesis are very effective crop disease control agents. They are systemic and provide protestant, curative and eradicant control. Sterols are important functional components in the maintenance of cell membrane integrity and are present in all eukaryotes. In fungi, sterol biosynthesis is carried out *de novo* from acetyl-CoA to produce the principal sterol in most fungi. The synthetic pathway to ergosterol is a feature of most fungi (e.g., Ascomycetes, Deuteromysetes, and Basidomycetes). In cereal powdery mildews, the principal sterol is 24-methylcholesterol. Ergosterol plays a unique role in the maintenance of membrane function and a reduction in ergosterol availability results in membrane disruption and electrolyte leakage.

Surfactins (see Arima K., Kakinums A., and Tamura, G., 1968, Surfactin, a Crystalline Peptidelipid Surfactant Produced by Bacillus subtilis: Isolation, Characterization and Its Inhibition of Fibrin Clot Formation, Biochem. Biophys. Res. Commun. 31:488-494) are cyclic depsipeptides produced by *Bacillus subtilis* and *Bacillus subtilis natto,* which contain β-hydroxy fatty acid and seven amino acids, including 2 of D-leucines. They show potent anti-fungal activities, anti-tumor activities, against Ehrlich ascites carcinoma cells and inhibit fibrin clot formation. The physicochemical interactions of the amphiphilic lipopeptide surfactins with the outer layer of the lipid membrane bilayer cause severe permeability changes of the ion channels and lead to the disruption of the membrane system. Surfactins also inhibit viral enzyme activities of the proton-ATPase, which are required for the entry of some viruses into cells (see Carrasco L., 1994, Entry of animal viruses and macromolecules into cells, FEBS Lett. 350:151-154), as demonstrated for the gastric $H^+,K^+$-ATPase for the surfactin analogue pumilacidin (see Naruse N., Tenmyo O., and Kobaru S., 1990, Pumilacidin, a complex of new antiviral antibiotics: Production, isolation, chemical properties, structure and biological activity, J. Antibiot. Japan, 43:267-280). The antiviral activity of surfactin has been determined for a broad spectrum of different viruses (see Vollenbroich D., Paul G., Ozel M. and Vater J., 1997, Antimycoplasma properties and application on cell cultures of surfactin, a lipopeptide antibiotic from Bacillus subtilis, Appl. Environ. Microbiol. 63:44-49), including Semiski forest virus, herpes simplex virus, suid herpes virus, vesicular stomatitis virus, simian immunodeficiency virus, foline calicivirus, murine encephalomyocarrtitis virus, enveloped virus, retroviruses, etc.

Iturins (see Peypoux F., Guinand M., Michel G., Delcambe L., Das B. C. and Lederer E., 1978, Structure of iturin A, a peptidolipid antibiotic from Bacillus subtilis, Biochemistry, 17:3992-3996) are anti-fungal lipopeptides, produced by a strain of *Bacillus subtilis*, which contain a cyclic heptapeptide including three of D- and four of L-α amino acids and a lipophilic β-amino acid with a 14 to16 carbon atoms aliphatic side chain. Iturins exhibit a wide range suppressive spectrum to various phytopathogenic fungi, yeasts and bacteria, both *in vitro* and *in vivo* (see Namai T., Hatakeda K. and Asano T., 1985, Identification of a bacterium which produces substances having antifungal activity against many important phytopathogenic fungi, Tohoku J. Agric. Res., 36:1-7 and Gueldner R. C., Reiley C. C., Pusey P. L., Costello C. E., Arrendale R. F., Cox R. H., Himmelsbach D. S., Crumley F. G. and Cutler H. G., 1987, Isolation and identification of iturin as antifungal peptides in biological control of peach brown rot with Bacillus subtilis, J. Agric. Food Chem., 36:366-370). The polar peptide moiety imparts amphipatic properties to iturin and the mode of action involves interactions with the target membrane. The existence of strong interactions between iturin and cholesterol leads to the formation of equimolecular complex. Iturin also reacts with ergosterol. These interactions between iturin and sterols of the membrane phytopathogenic cell effectively modify the membrane permeability and lipid composition, therefore leading to the enlargement of the $K^+$ ion release channel and loss of various cellular compounds, resulting in the decomposition of cellular filament and inhibiting the budding of new cell spores.

According to U.S. FDA, *Bacillus subtilis* species are being classified under the GRAS listing of microorganisms for producing animal feed grades of digestive enzymes including proteases, carbohydrates, and lipases.

Hoppensack et al describe the use of Bacillus Licheniformis to convert ammonium in liquid manure into biomass and a small amount of poly (γ-glutamic acid) (FEMS MICROBIOLOGY LETTERS, vol. 218, no.1, pages 39-45 [2003]).

Most fungicides utilized in the world are used to control diseases caused by only 12 fungi. Although most fungicides are relatively nontoxic to mammals, some such as mercury-containing compounds are very toxic and human disasters occur when they are improperly used. Applications of some fungicides have resulted in an increased amount of diseases caused by other uncontrolled pathogens. For example, some fungicides used for control of peanut leafspot increased the amount of stem rot (*Sclerotium rolfsii*) on peanut, and applications of benomyl resulted in increased incidences of sharp eyespot disease of rye caused by Rhizoctonia solani, fruit rot of strawberry (species of Rhizopus), and wet stem rot of cowpea (*Pythium aphanidermatium).* The use of two or three fungicides of diverse specificities approaches the effects as achieved by a broad-spectrum of toxicants. Plant growth hormones are well known as antagonists of fungal disease. The auxins, by their effects on cell-wall structure, are particularly active against wilt diseases. Other growth regulators for example auxin transport inhibitors and gibberellin biosynthesis inhibitors, also reduce the severity of Fusarium and Verticillium wilt diseases in tomato and cotton. The antagonistic activity of the biosynthesis inhibitor chlormequat chloride against Pherpotrichoides is probably due to the enhanced stem strength that results from the application of this growth retardant, rather than from a direct effect on fungal activity. The cytokinin kinetin has a spectrum of antagonistic activity against fungal pathogens, including *Alternaria spp.* and members of the Erysiphales, probably through a decrease in the rate of pathogen-induced protein and nucleic acid degradation.

JP 2002 305975 A describes the use of a gel water-holding body produced using a radiation cross-linked body of γ-polyglutamic acid as a plant supplement.

## SUMMARY OF THE INVENTION

Our studies show that γ-PGA, its salts, i.e., γ-polyglutamates (in $Na^+$, $K^+$, $NH_4^+$, $Mg^{++}$ and $Ca^{++}$ forms), γ-polyglutamate hydrogels (prepared from γ-polyglutamates in $Na^+$, $K^+$, $NH_4^+$, $Mg^{++}$ and $Ca^{++}$ forms), and/or a fermentation broth comprising γ-PGA, its salt and/or γ-polyglutamate hydrogel possess, in addition to their non-toxicity toward human body, biodegradability and the environmentally friendly degraded end-products, glutamic acids, thereof, multiple functionalities including: high water absorption and retention; good controlled release capability for long lasting effectiveness; chelating and enveloping heavy toxic metal ions for detoxicification; forming coordinated ionic complexes with calcium and magnesium for better nutritional bioavailability; and good anti-phytopathogenic activity. With all of these combined and concerted functionalities, γ-PGA, its salt and/or γ-polyglutamate hydrogel apparently are excellent ingredients for use in renovating soil quality for stimulation of the growth and protection of agricultural crops and other plants and seeds from phytopathogenic effects. The approach for integrating the effects of plant nutrition, soil pH, water activity in soil, and the complex of fungicides for prevention of the symptoms and the plant diseases caused by soil-borne phytopathogens appears to be the right direction and a better choice.

## DESCRIPTION OF THE DRAWINGS

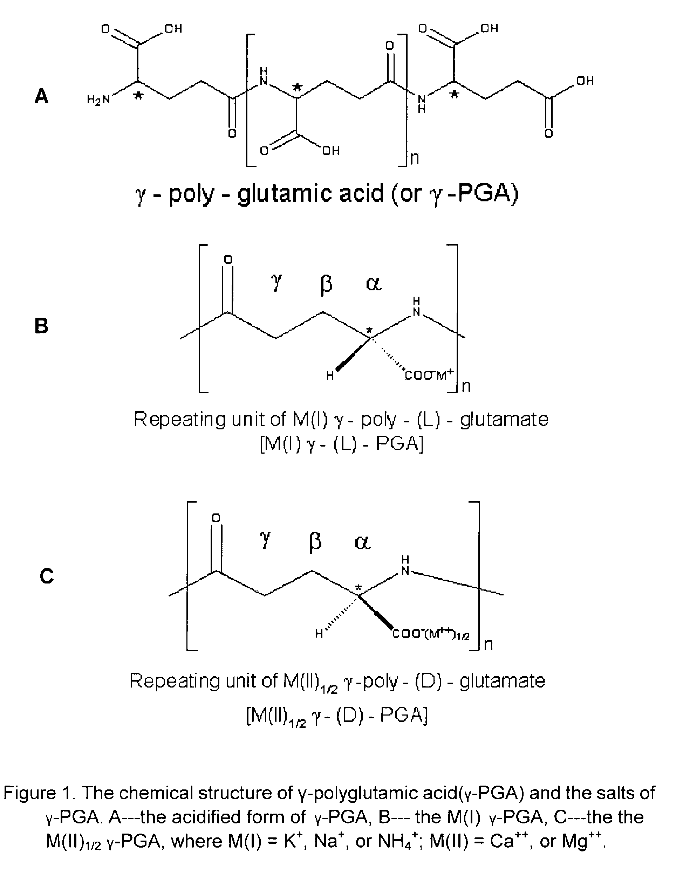

Figure 1 shows the chemical structure of γ-PGA (H form) (A), γ-polyglutamate in $K^+$ form, γ-polyglutamate in $Na^+$ form, and γ-polyglutamate in $NH_4^+$ form (B), and γ-polyglutamate in $Ca^{++}$ form and γ-polyglutamate in $Mg^{++}$ form (C). M(I)=$K^+$, $Na^+$, or $NH_4^+$ M(II)=$Ca^{++}$ or $Mg^{++}$.

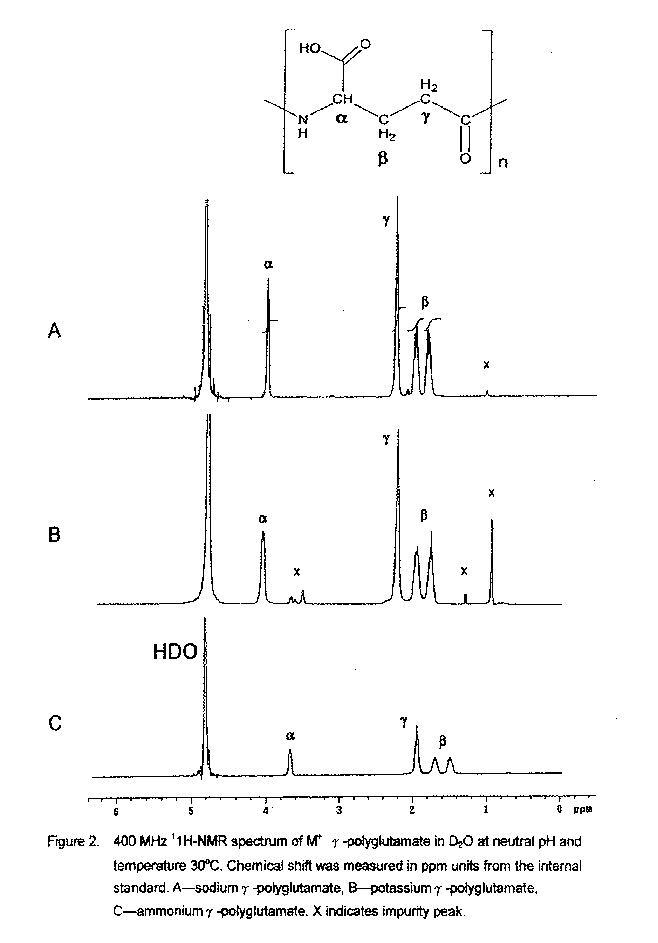

Figure 2 shows 400 MHz $^1$H-NMR spectra of γ-polyglutamate in $Na^+$ form (A), γ-polyglutamate in $K^+$ form (B), and γ-polyglutamate in $NH_4^+$ form (C) in $D_2O$ at neutral pH and temperature of 30°C. Chemical shift was measured in ppm units from the internal standard. X indicates impurity peak.

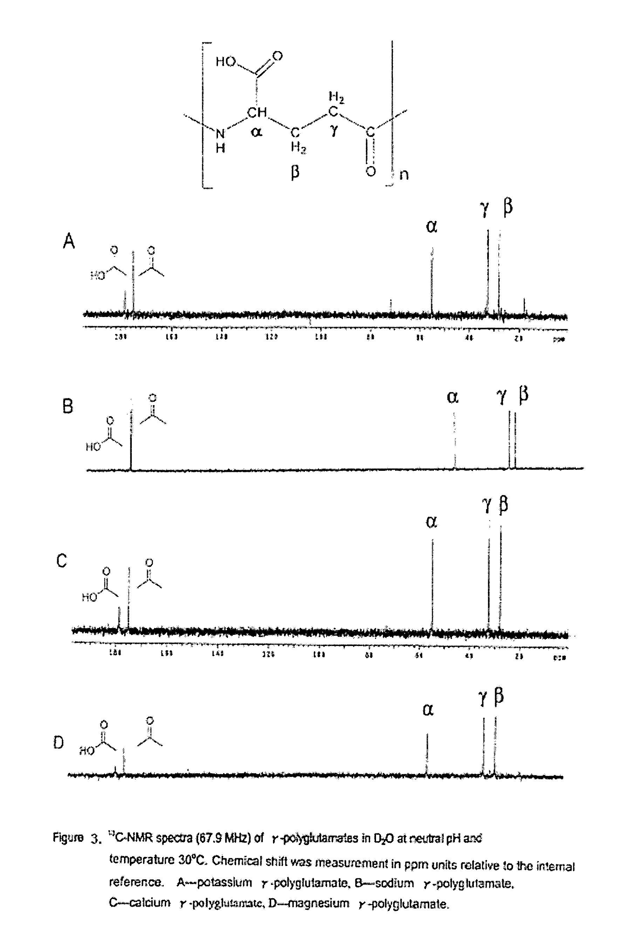

Figure 3 shows $^{13}$C-NMR spectra of γ-polyglutamate in $K^+$ form (A), γ-polyglutamate in $Na^+$ form (B), γ-polyglutamate in $Ca^{++}$ form (C), and γ-polyglutamate in $Mg^{++}$ form (D) in $D_2O$ at neutral pH and temperature of 30°C. Chemical shift was measured in ppm units from the internal reference.

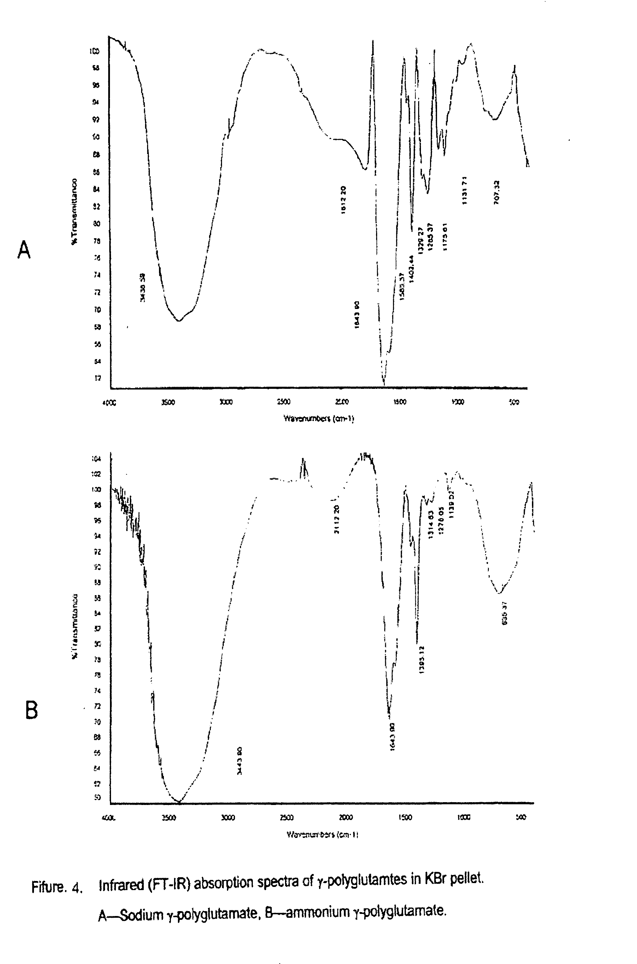

Figure 4 shows infrared (FT-IR) absorption spectra of γ-polyglutamate in $Na^+$ form (A) and γ-polyglutamate in $NH_4^+$ form (B) in KBr pellet.

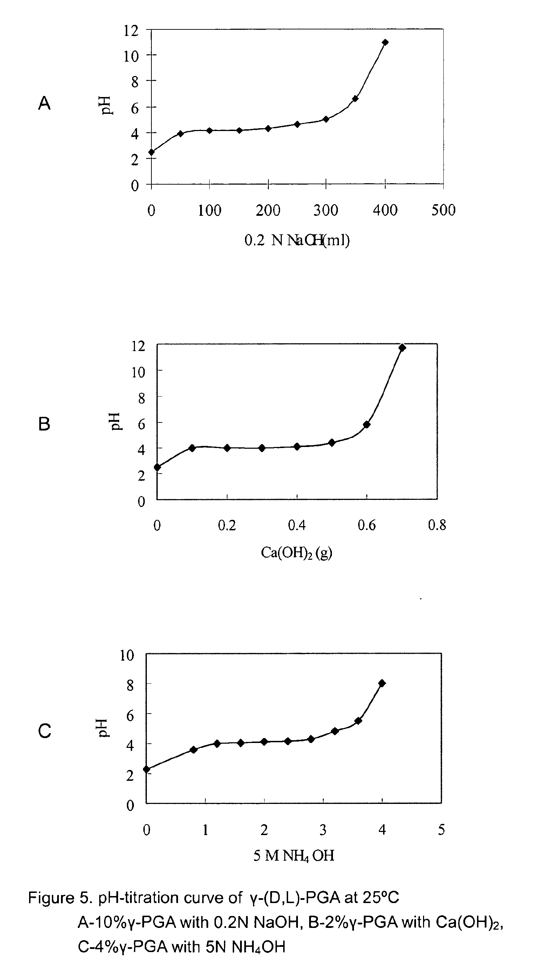

Figure 5 shows pH-titration curves of 10% γ-PGA with 0.2N NaOH (A), 2% γ-PGA with $Ca(OH)_2$ (B), and 4% γ-PGA with 5N $NH_4OH$ (C) at 25°C.

## DETAILED DESCRIPTION OF THE INVENTION

The present invention relates to a method for enhancing the growth of crops, plants, or seeds, simultaneously strengthening plant stem and trunks, increasing the yields of crops, and improving the suppression of phytopathogenic diseases, which comprises a material containing γ-PGA, and/or its salt (in $Na^+$, $K^+$, $NH_4^+$, $Ca^{++}$, or $Mg^{++}$ form), a γ-polyglutamate hydrogel, a fermentation broth comprising γ-PGA, its salt and/or γ-polyglutamate hydrogel, or a mixture thereof to the crops, plants, or seeds, or fields for growing the crops, plants or seeds.

γ-PGA, γ-Polyglutamates (in $Na^+$, $K^+$, $NH_4^+$, $Mg^{++}$ and $Ca^{++}$ form) and γ-polyglutamate hydrogels (prepared from γ-polyglutamate in $Na^+$, $K^+$, $NH_4^+$, $Mg^{++}$ and $Ca^{++}$ form) possess exceptional strong water absorption and binding capability, and can effectively retain and slowly release the retained water for long-lasting effect, which are important for agricultural field and especially for the dry lands or the areas under dry warm/hot weather conditions. The high water retention can largely improve the water activity in the soil for the proliferation of microbes and also facilitate the transportation of the nutrients toward the plant seeds or roots, needed for growth.

In addition, γ-PGA and γ-polyglutamates (in $Na^+$, $K^+$, $NH_4^+$, $Mg^{++}$ and $Ca^{++}$ form) can be produced from L-glutamic acid via a submerged fermentation process (see Kubota H. et al., 1993, Production of poly γ-glutamic acid) by Bacillus subtilis F-2-01, Biosci. Biotech. Biochem, 57 (7), 1212-1213 and Ogata Y. et al., 1997, Efficient production of γ-polyglutamic acid by Bacillus subtilis (natto) in jar fermentation, Biosci. Biotech. Biochem., 61 (10), 1684-1687). γ-PGA and γ-Polyglutamates possess excellent water absorption properties, and their polyanionic properties are being explored for applications in solubilizing and stabilizing the metal ions of $Ca^{++}$, $Mg^{++}$, $Mn^{++}$, $Zn^{++}$, $Se^{++++}$, and $Cr^{+++}$ in aqueous systems. Particularly, γ-PGA and γ-polyglutamates (in $Na^+$, $K^+$ and $NH_4^+$ form) readily react with a calcium salt or magnesium salt, at neutral conditions (see Ho, G. H., 2005, γ-Polyglutamic acid produced by Bacillus subtilis var. natto: Structural characteristics and its industrial application, Bioindustry, Vol. 16, No. 3, 172-182) to form water soluble and stable calcium γ-polyglutamate or magnesium γ-polyglutamate. The ionic complexes of calcium γ-polyglutamate and magnesium γ-polyglutamate provide the readily available $Ca^{++}$ ion and $Mg^{++}$ ion for the nutritional need for seed growth and even more effectively transported to the roots of growing plant, resulting in all-over enhancement of the growing of the plant seeds, plant roots, crops and other plants.

Metal adsorption onto γ-PGA involves two possible mechanisms: (1) direct interaction of metal ions with carboxylic sites and (2) retention of heavy metal counter-ions in mobile form by the electrostatic potential field created by the COO- groups. Besides the interactions with the carboxylate groups, amide linkages may also provide weak interaction sites. In addition to the conformational structure and ionization of γ-PGA, it is also important to know the types of hydrolyzed metal species, which are present in aqueous solution. The formation of a variety of different species may lead to different adsorption capacities of metal ions.

The molecular structures of γ-PGA and γ-polyglutamates (in $Na^+$, $K^+$, $NH_4^+$, $Ca^{++}$ and $Mg^{++}$ forms) are shown in Figure 1, the typical $^1$H-NMR, [1]C-NMR, and FT-IR spectra are shown in Figures 2, 3, and 4, respectively. The spectral and analytical data are summarized in Table 1. The pH - titration cures are shown in Figure 5.

Table 1.

| ITEM | H | $Na^+$ | $K^+$ | $NH_4^+$ | $Ca^{++}$ | $Mg^{++}$ |
|---|---|---|---|---|---|---|
| a.$^1$H-NMR(400MHz, $D_2O$, 30°C) Chemical shift in ppm: | | | | | | |
| α CH | | 3.98 | 4.00 | 3.68 | 4.18 | 4.08 |
| β $CH_2$ | | 1.98, 1.80 | 1.99, 1.80 | 1.68, 1.48 | 2.16, 1.93 | 2.05, |
| γ CH2 | | 2.19 | 2.19 | 1.93 | 2.38 | 1.88 |
| | | | | | | 2.31 |
| b. $^{13}$C-NMR(67.9MHz, $D_2O$, 30°C Chemical shift in ppm; | | | | | | |
| α CH | | 56.43 | 62.21 | | 62.21 | 62.10 |
| β $CH_2$ | | 31.61 | 35.16 | | 36.17 | 35.11 |
| γ $CH_2$ | | 34.01 | 39.74 | | 39.68 | 39.60 |
| CO | | 182.21 | 182.11 | | 182.16 | 182.12 |
| $COO^-$ | | 182.69 | 185.46 | | 185.82 | 185.16 |
| a. FT-IR absorption (KBr), $cm^{-1}$ | | | | | | |
| C=O , Stretch | 1739 | | | | | |
| Amid I, N-H bending | | 1643 | | 1643 | 1622 | 1654 |
| Amide II, stretch | | 1585 | | | | |
| C=O, symmetric stretch | 1454 | 1402 | | 1395 | 1412 | 1411 |
| C-N, stretch | 1162 | 1131 | | 1139 | 1116 | 1089 |
| N-H, oop bending | 698 | 707 | | 685 | 669 | 616 |
| O-H, stretch | 3449 | 3436 | | 3443 | 3415 | 3402 |
| b. Thermal analysis: | | | | | | |
| Hydrated water | 0 | 10% | 42% | | 20% | 40% |
| Dehydration temperature, °C | | 109. | 139. | | 110 | 122 |
| $T_m$, °C | 206 | 160 | 193,238 | 219 | | 160. |
| $T_d$, °C | 209.8 | 340 | 341 | 223 | 335.7 | 331.8 |

γ-PGA is a glutamic acid polymer with a degree of polymerization ranging from 1,000 up to 20,000 and is formed in only γ-peptide linkage between the glutamic moieties. γ-PGA contains a terminal amine and multiple α-carboxylic acid groups. The polymer generally exists in several conformational states: α-helix, random coil, β-sheet, helix-coil transition region and enveloped aggregation, depending on the environmental conditions such as pH, ionic strength and other cationic species. With circular dichroism ("CD"), the amount of helical form present is usually measured as a function of magnitude of the spectra at 222 nm. Helix-coil transition takes place from about pH 3-5 for free form of γ-PGA in homogeneous aqueous solution, and shift to a higher pH 5-7 for a bonded form. The transition from random coil to enveloped aggregation occurs when chelating with certain divalent and some higher metallic ions through drastic conformational change of γ-PGA.

γ-PGA can form four types of hydrogen-bonding in every three consecutive glutamic moieties (see Rydon H. N., 1964, Polypeptides, Part X, The optical rotary dispersion of poly γ-D-glutamic acid, J. Chem. Soc., 1928-1933), as compared to only 1 hydrogen-bonding in every 3.6 units of amino-acid residues found in most proteins, and thus possesses exceptional strong hydrophilicity. Its conformational states also play important roles as carriers and stimulants for many other biological functions, including anti-phytopathogenic activities. Combining all of the above-mentioned properties, γ-PGA and its salt and/or γ-polyglutamate hydrogel can be used in soil conditioning or soil renovation for facilitating the growth of agricultural crops and as agricultural biocides in control of phytopathogens, simultaneously.

In one embodiment of the subject invention, the γ-polyglutamate hydrogel is prepared from γ-polyglutamate in Na$^+$ form, γ-polyglutamate in K$^+$ form, γ-polyglutamate in NH$_4$$^+$ form, γ-polyglutamate in Mg$^{++}$ form, γ-polyglutamate in Ca$^{++}$ form, or a mixture thereof cross-linked with diglycerol polyglycidyl ether, polyglycerol polyglycidyl ether, sorbitol polyglycidyl ether, polyoxyethylene sorbitol polyglycidyl ether, polysorbitol polyglycidyl ether, or polyethylene glycol diglycidyl ether, or a mixture thereof. In another embodiment of the subject invention, the γ-polyglutamate hydrogel is prepared from γ-polyglutamate in Na$^+$ form, γ-polyglutamate in K$^+$ form, γ-polyglutamate in NH$_4$$^+$ form, γ-polyglutamate in Mg$^{++}$ form, γ-polyglutamate in Ca$^{++}$ form, or a mixture thereof cross-linked by irradiation with gamma ray or electron beams.

According to the subject invention, the material containing γ-PGA and/or its salt, a γ-polyglutamate hydrogel, a fermentation broth comprising γ-PGA, its salt and/or γ-polyglutamate hydrogel, or a mixture thereof is used as a biocide, a moisturizer for soil conditioning and renovation, a growth stimulant for spraying on the plant leaves, a chelating agent for removing a heavy metal present in the field for growing the crops, plants, or seeds, and/or a complexing agent for forming soluble calcium and/or magnesium. When the aforementioned material of the subject invention is applied to seeds, it is coated on the seeds.

Moreover, the aforementioned material can be dissolved in a polar solvent, such as ethanol or methanol, or water and the pH is adjusted to range from 5.0 to 8.0. The concentration of γ-PGA and/or its salt in the polar solvent or water ranges from 0.001 wt% to 15 wt%. In addition, the aforementioned material has a ratio of D-from glutamic acid and/or glutamate to L-form glutamic acid and/or glutamate of from 90%:10% to 10%:90%, preferably from 65%:35% to 35%:65%.

## EXPERIMENTAL METHODS OF THE INVENTION

Commercial quantity of γ-PGA and its salts, γ-polyglutamates (in Na$^+$, K$^+$, NH$_4$$^+$, Ca$^{++}$ and Mg$^{++}$ forms) can be produced in a submerged fermentation process with *Bacillus subtilis, Bacillus subtilis* var. natto (see Naruse N., Tenmyo O. and Kobaru S., 1990, Pumilacidin, a complex of new antiviral antibiotics: Production, isolation, chemical properties, structure and biological activity, J. Antibiot. Japan, 43:267-280) or *Bacillus licheniformis* (see Vollenbroich D., Paul G., Ozel M. and Vater J., 1997, Antimycoplasma properties and application on cell cultures of surfactin, a lipopeptide antibiotic from Bacillus subtilis, Appl. Environ. Microbiol., 63:44-49) by using L-glutamic acid and glucose as main feed stocks. The microbial culture media contain carbon source, nitrogen source, inorganic minerals, and other nutrients in a proper quantity. Usually, the amount of L-glutamic acid is used at a concentration ranging from 3 to 12%. Glucose at a concentration of 5-12% and citric acid at a concentration of 0.2 to 2% are used as partial carbon source. Peptone and ammonium sulfate (or urea or NH$_3$) are used as nitrogen sources. Yeast extract and biotin are used as nutrient sources. Mn$^{++}$, Mg$^{++}$ and NaCl are used as mineral sources. Under proper aeration and agitation, the culture is maintained at a temperature of from 30 to 40°C, and pH is maintained at 6-7.5 by using a urea solution, NH$_3$, or sodium hydroxide solution. The culture time is normally continued for a period of 48 to 84 hours. γ-PGA and its salts, γ-polyglutamates are accumulated extracellularly.

γ-PGA and its salts, γ-polyglutamates (in Na$^+$, K$^+$, NH$_4$$^+$, Ca$^{++}$ and Mg$^{++}$ forms) are normally extracted from the fermentation broth by a series of procedure, including ultra-centrifugation, or pressurized filtration to separate cells, then adding 3 to 4 times of ethanol to precipitate out γ-PGA and its salts. The precipitates are re-dissolved in water, and another portion of ethanol is used to precipitate out γ-PGA and its salts. The dissolution-precipitation steps are repeated several times in order to recover pure γ-PGA and its salts.

γ-PGA and its salts, γ-polyglutamates (in Na$^+$, K$^+$, NH$_4$$^+$, Ca$^{++}$ and Mg$^{++}$ forms) are normally dissolved in a proper solvent such as water, ethanol or methanol and pH is adjusted to from 5.0 to 7.5. The properly selected multiple functional chemical cross-linking agents such as polyglycerol polyglycidyl ethers, sorbitol-based polyglycidyl ethers, polyethylene glycol diglycidyl ether, or trimethylolpropane triacrylate are added to the solution under constantly stirring, at a dose rate ranging from 0.01 to 20% of the weight of γ-PGA and its salts, depending on the type of cross-linking agents and the quality of hydrogels required. The gelling reaction is normally completed within 1 to 4 hours at a reaction temperature from 50 to 120°C depending on the equipment and conditions used. The hydrogels formed are then freeze-dried to produce dried cross-linked γ-PGA and its salts, γ-polyglutamate hydrogels (prepared from γ-polyglutamates in Na$^+$, K$^+$, NH$_4$$^+$, Ca$^{++}$, and Mg$^{++}$ forms), which possess super water absorption capacity, are non-water soluble, and form colorless, transparent and biodegradable hydrogels when fully swell in water.

γ-PGA and its salts, γ-polyglutamates (in Na$^+$, K$^+$, NH$_4$$^+$, Ca$^{++}$ and Mg$^{++}$ forms) with molecular weight ranging from 5,000 to 900,000 can be produced by controlled acidic-hydrolysis at a specific selected reaction conditions of pH, temperature, reaction time and concentration of γ-PGA. The pH can be adjusted from 2.5 to 6.5 with a proper acidulant, such as HCl, H$_2$SO$_4$, or other organic acids, the hydrolysis temperature can be controlled in the range from 50 to 100°C, the reaction time is from 0.5 to 5 hours, and the concentration of γ-PGA with molecular weight from 1x10$^6$ and higher can be any concentration as convenient as required. After the reaction is completed, further purification with dialysis or membrane filtration and drying are necessary to produce high purity small and middle molecular weight γ-PGA and its salts, γ-polyglutamates (in Na$^+$, K$^+$, NH$_4$$^+$, Ca$^{++}$ and Mg$^{++}$ forms) of choice. The acid-hydrolysis rate is faster at lower pH, higher temperature, and higher concentration of γ-PGA. The γ-polyglutamate salts can be produced by reaction of selected γ-PGA with basic hydroxide solution or oxide of the metal ions ($Na^+$, $K^+$, $NH_4^+$, $Ca^{++}$ and $Mg^{++}$) of choice, and pH is adjusted to desired condition from 5.0 to 7.2 as required

**EXPERIMENTAL EXAMPLES**

In order to further explain the subject invention in detail, the experimental examples are presented in the following to show that the subject invention can be utilized to achieve the subject purpose.

**EXPERIMENTAL EXAMPLE 1**

300 L of culture broth containing 0.5% yeast extract, 1.5% peptone, 0.3% urea, 0.2% $K_2HPO_4$, 10% monosodium L-glutamic acid, 8% glucose, pH 6.8 was prepared, and added to a 600L fermentor, and then steam sterilized following the standard procedure. *Bacillus subtilis* was then inoculated and 10% NaOH solution is used to control pH. Fermentation was continued at 37°C for 96 hrs. The content of γ-PGA in the culture broth reached 40 g/l. Aliquots of 15 grams of the culture broth were taken and transferred to each of the three 50 ml sample bottles with caps. Then, an amount of 600μl of the glycerol- or sorbitol-based polyglycidyl ethers were taken and transferred to the sample bottles containing culture broth, and capped. The reaction mixtures were then allowed to react at 60°C for 24 hrs in a shaker incubator, rotating at a middle speed. The reacted mixtures were then taken out of the 20 ml sample bottles, and soaked in sufficient water at 4°C overnight. The hydrogels were formed after hydration and swelling. The hydrogels were then filtered with an 80-mesh metal screen, and drained to dry. The weights of swollen hydrogels without obvious free water were measured and recorded. The gels were resoaked in sufficient water at 4°C in the same beaker overnight. The same procedure was repeated for consecutive 5 days. The water absorption rates were determined as shown in Table 2.

Determination of the water absorption rate of γ-**polyglutamate** hydrogels:

Weighted samples ($W_1$) of the dried hydrogels was soaked in an excess amount of water, and left in the water for swelling overnight to achieve highest hydration. An 80-mesh metal screen was used to filter the hydrated hydrogels to eliminate the free water and drained to dry. The dried hydrogel was then weighted ($W_2$). The amount of water absorbed (W) is defined as the difference: $W = W_2 - W_1$.

$$\text{The water absorption rate, } X = W / W_1 = (W_2 - W_1) / W_1$$

Table 2: The water absorption rate of γ-polyglutamate hydrogel ($Na^+$) made from fermentation broth with different cross-linking agents

| Cross-linking agent | Reaction time hrs | Water absorption rate, X | Remark |
|---|---|---|---|
| Di-glycerol polyglycidyl ether | 24 | 4450 | 3-dimensional |
| Polyglycerol polyglycídyl ether | 24 | 4560 | 3-dimensional |
| Polyoxyethylene sorbitol polyglycidyl ether | 24 | 4480 | 3-dimensional |

**EXPERIMENTAL EXAMPLE 2**

According to the method shown in Experimental Example 1, samples of 5% sodium γ-PGA solutions and diglycerol polyglycidyl ether were used as the polyglycidyl cross-linking compound in another set of experiment. The pH was further adjusted to those as shown in Table 3. The reaction mixtures were put inside a culture shaker, rotating at a middle speed. The reaction was allowed to continue at 60°C for 24 hrs. After the reaction was completed, the water absorption rates were determined, and the results were shown in Table 3

Table 3: Water absorption rate of γ-polyglutamate hydrogels ($Na^+$ form) produced at different pH values

| pH | Water absorption rate (X) | Remark |
|---|---|---|
| 4 | 435 | 3-dimensional |

(continued)

| pH | Water absorption rate (X) | Remark |
|---|---|---|
| 5 | 610 | 3-dimensiona |
| 6 | 3450 | 3-dimensional |
| 7 | 4550 | 3-dimensional |

## EXPERIMENTAL EXAMPLE 3

According to the method shown in Experimental Example 1, sample of 5% sodium $\gamma$-PGA solutions and diglycerol polyglycidyl ether were used as the in an another set of experiment. The solutions were adjusted to pH 6.0. Various amounts of diglycerol polyglycidyl ether were used for the cross-linking reactions. The reaction was allowed to continue at 60°C for 24 hrs. The water absorption rates for samples at various hydration times determined and the results are shown in Table 4.

Table 4: Different swollen and hydration rate of $\gamma$-polyglutamate hydrogels (Na+ form) at 4°C

| Diglycerol poly-glycidyl ether % | Water absorption rate, X | | | | |
|---|---|---|---|---|---|
| | Swelling/hydration time, hrs. | | | | |
| | 24 | 48 | 72 | 96 | 120 |
| 2 | 450 | 1250 | 2350 | 4050 | 4150 |
| 3 | 459 | 1103 | 2200 | 4100 | 4280 |
| 4 | ----- | ----- | 2090 | 4010 | 4120 |

## EXPERIMENTAL EXAMPLE 4

According to the method shown in Experimental Example 1, *Bacillus subtilis* was inoculated and the growth of the culture was in the same way as shown in Experimental Example 1. Samples of the culture broth at different growth time were withdrawn from the fermentor for use in this set of experiment. Diglycerol polyglycidyl ether was used as the cross-linking agent. The solutions were adjusted to pH 6.0. The reaction was allowed to continue at 60°C for 24 hrs. By following the same method conducted in Experimental Example 1. The results of water adsorption rates at different culture time were shown in Table 5.

Table 5: The water absorption rates of $\gamma$-polyglutamate hydrogel (Na+ form) at 4°C, made from the microbial culture at different fermentation times

| Cultivation time, hrs | Water absorption rate, x | Remark |
|---|---|---|
| 48 | 2600 | 3-dimensional |
| 72 | 3050 | 3-dimensional |
| 84 | 3000 | 3-dimensional |
| 96 | 3550 | 3-dimensional |

## EPERIMENTAL EXAMPLE 5

The high solubility of calcium $\gamma$-polyglutamate at and near neutral pH, and good pH buffer capacity (in the range of pH 4 to 7.0) as shown in the pH-titration curve in the following figure (i.e., Figure 5, B) are beneficial in soil conditioning for facilitating the growth of seeds, roots and the plants.

## EXPERIMENTAL EXAMPLE 6

The effectiveness of $\gamma$-polyglutamate (in $Na^+$ form) and $\gamma$-polyglutamate hydrogel (prepared from $\gamma$-polyglutamate in $Na^+$ form) against the growth or inhibiting the population of agricultural pathogens was investigated. The standard Potato Dextrose Agar Method (PDA disc) was followed. The inhibition on pathogen growth was measured. The concentrations of $\gamma$-polyglutamate (in $Na^+$ form) and $\gamma$-polyglutamate hydrogel (prepared from $\gamma$-polyglutamate in $Na^+$ form) in the range of 1% to 5% were used in the inhibitory study.

**Preparation of pathogen sample solution:**

Selected pathogen samples were inoculated onto the center of a plain potato dextrose agar ("PDA") disc, then incubated under 25°C for a period of 3 to 9 days before use, depending on the kind of pathogens. A sample of 4 mm diameter from fully grown pathogen PDA disc was obtained with a 4 mm sterilized perforator, and deposited onto the center of a new PDA disc and stored in an incubator under 25°C as a spare sample source.

**Preparation of the 10% $\gamma$-polyglutamate (in $Na^+$ form) solution samples:**

Three grams of $\gamma$-polyglutamate (in $Na^+$ form) sample was transferred into a 200 ml Erlenmyer flask and 27 ml sterile water was added to make a 10 time diluted sample solution. The sample flask was then shaken with a reciprocating shaker at 200 rpm, 30°C for 1 hr. The flask was then further incubated in a water bath at 60°C, and hold for another 30 minutes after temperature reaches 60°Cbefore use.

**Preparation of the 50% $\gamma$-polyglutamate (in $Na^+$ form) fermentation broth samples:**

50 ml of fresh fermentation broth samples was transferred into a sterile flask, and 50 ml sterile water was added, mixed well and ultra-centrifuged at 10,000 rpm for 30 min to separate cells. The top clear solution was then passed through a 0.4 $\mu$m microfiltration membrane to be used as a 50% fermentation broth solution.

To test the effectiveness of each sample concentration, 100ml of PDA media containing 100 ppm of neomycin sulfate was prepared to prevent from any contamination of environmental microflora. The disc of PDA media containing only 100 ppm neomycin sulfate was used as control. The 100 ml of PDA medium was equally dispensed into 5 Petri discs with 9 cm in diameter. After solidifying, a piece of 4 mm pathogen samples was inoculated onto the center of each PDA Petri disc. Then, it was incubated at 25°C with pathogen sample face down. Five multiplicate sets were used. Until the control disc was fully grown with the pathogen, growth diameter, mm, of each sample concentration was recorded.

**Dual culture with Nutrient Agar ("NA") for pathogenic bacteria inhibition experiment:**

The pathogenic bacteria were prepared to have a concentration of $10^{7-8}$ cfu/ml, transfer 0.1 ml into each NA Petri disc and spread even. Then, 2 pieces of 1.0 cm diameter of filter paper containing the test sample of different concentrations were deposited. Triplicate sets of test were used. The filter paper without containing test samples was used as control. The NA Petri disc was incubated at 25°C for 2-4 days.

The diameters of the growth areas were recorded.

Afterward, agricultural pathogens were tested for their growth inhibition by $\gamma$-polyglutamate (in $Na^+$ form), $\gamma$-polyglutamate hydrogel (prepared from $\gamma$-polyglutamate in $Na^+$ form), and $\gamma$-polyglutamate (in $Na^+$ form) fermentation broth, respectively. The results are shown in Tables 6, 7, 8, 9, and 10, respectively.

Table 6: The inhibition on the growth of pathogens by γ-polyglutamate (in Na⁺ form)

| Pathogens tested | Inhibition on mycelial growth in 48 hrs, cultured on PDA | Concentration of γ-polyglutamate (in Na⁺ form) Mol. wt. = 500k Daltons |
|---|---|---|
| Fungal species: | | |
| Sclerotium rolfsii | 0 % | 0.5 % |
| Sclerotium rolfsii | 0 % | 1.0 % |
| Rhizoctonia solani | 15-25 % | 0.5 % |
| Rhizoctonia solani | 30-50 % | 1.0 % |
| Fusarium oxysporum Anocctochilum | 15-25 % | 0.5 % |
| Fusarium oxysporum Anocctochilum | 15-25 % | 1.0 % |
| Phytophthora capsici | 0 % | 1.0 % |
| Pythium aphanidermatum | 0 % | 1.0 % |
| Pythium myriotylum | 0 % | 1.0 % |
| Bacteria species: | | |
| Ralstonia solanacearum | > 50 % | 0.5 % |
| Erwinia carotovora | 15-25 % | 0.5 % |
| Erwinia carotovora | 30-50 % | 1.0 % |

Table 7: The inhibition on the growth of pathogens by γ-polyglutamate (in Na⁺ form) fermentation broth

| Pathogens tested | Inhibition on mycelial growth in 48 hrs, cultured on PDA | Concentration of γ-polyglutamate (in Na⁺ form) fermentation broth |
|---|---|---|
| Fungal species: | | |
| Sclerotium rolfsii | | 1 % |
| Sclerotium rolfsii | 15-25 % | 5 % |
| Rhizoctonia solani | 0 % | 1 % |
| Rhizoctonia solani | 15-25 % | 5 % |
| Fusarium oxysporum Fsp. Niveum | 10-20 % | 5 % |
| Phytophthora capsici | 0 % | 5 % |
| Pythium aphanidermatum | 0 % | 5 % |
| Pythium myriotylum | 0 % | 5 % |
| Bacteria species: | | |
| Ralstonia solanacearum | 0 % | 1 % |
| Ralstonia solanacearum | 30-50 % | 5 % |
| Erwinia carotovora | 0 % | 5 % |

Table 8: The inhibition on the growth of pathogens by γ-polyglutamate (in Na⁺ form) fermentation broth (Dual culture with paper disc on Nutrient Agar)

| Pathogens tested | Inhibition on growth zone in 48 hrs | Concentration of γ-polyglutamate (in Na⁺ form) fermentation broth |
|---|---|---|
| Bacteria species: | | |
| Ralstonia solanacearum | 0.6-1.0 cm | 5% |
| Erwinia carotovora | 0.0 | 5% |

Table 9: The inhibition on the growth of pathogens by γ-polyglutamate hydrogels (prepared from γ-polyglutamate in Na+form)

| Pathogens tested | Inhibition on mycelial growth in 48 hrs, cultured on PDA | Concentration of γ-polyglutamate hydrogel (Na+) |
|---|---|---|
| Fungal species: | | |
| Sclerotium rolfsii | 51-75 % | 1 % |
| Rhizoctonia solani | 25-50 % | 1 % |
| Fusarium oxysporum | 10-25 % | 1 % |
| Phytophthora capsici | 25-50 % | 1 % |
| Pythium aphanidermatum | 25-50 % | 1 % |
| Pythium myriotylum | 25-50 % | 1 % |

Table 10: The inhibition on the growth of pathogens by γ-polyglutamate hydrogel (prepared from γ-polyglutamate in Na+form)

| Pathogens tested | Inhibition on growth in 48 hrs, dual culture on Nutrient Agar Inhibition zone* (radius) | Concentration of γ-polyglutamate hydrogel (in Na+ form) |
|---|---|---|
| Bacteria species: | | |
| Ralstonia solanacearum | > 15 mm | 1 % |
| Erwinia carotovora | 10-15 mm | 1 % |
| Note: Inhibition zone* = (Zone of treated paper disc) - (zone of blank paper size disc or PGA disc, 0.5 cm) | | |

**EXPERIMENTAL EXAMPLE 7**

**Study on growing of Diana watermelon in an open farm field in a Silo agricultural farm:**

An open farm field of 1000 M$^2$ (10M x 100M) area was divided into 2 equal lots of 5M x 100M by a trough of 20cm width x 25cm high. The lots were designated as lot A and lot B. Lot A is used for the control set, and lot B is for experimental set. 2 pieces of the Diana watermelon 1-week-old young plants were planted at a distance of 1m apart for both lots. Regular fertilizers and irrigation are following the standard program and procedures, Taiwan Fertilizer Organic No. 39 (12-18-12) was utilized and 3 times irrigation were applied for lot A, and the irrigation fluids enriched with the γ-PGA fermentation broth containing 3.5%γ-PGA (Na+ form) at a dose rate of 0.75kg/ per 500M$^2$ were applied for Lot B, theγ-PGA fermentation broth was diluted approximately 300 times. The irrigations were applied three times at an interval of 20 days in between. The irrigation was performed at same time for both Lot A and B, with automatically controlled water pump, and equal quantities of fluids were applied to both Lot A and Lot B. The Diana watermelons were harvested at the end of 60 days, and the results were evaluated and showed in Table 11.

Table 11. The effect ofγ-PGA fermentation broth containing 3.5%γ-PGA (Na+ form) on the growth of Diana watermelon.

| | Harvest period Days | Ave. size* in horizontal dia. cm | Relative yield In the same period % | Appearance quality |
|---|---|---|---|---|
| Lot A (control) | 15 | 21 | 100% | Smooth/shining |
| Lot B (test) | 25 | 26 | 125% | Smooth/shining |
| % increase, 100% x(B-A)/A | 66.7% | 30% | 25% | |
| Note: * --- the average size of random 10 samples of Diana watermelon | | | | |

## EXPERIMENTAL EXAMPLE 8

**Study on the growth of sweet pepper in an open agricultural field in a Chia-Yi farm:**

In a similar open field study as shown in Experimental Example 7, using sweet pepper 1 week old young plants in stead of Diana watermelon. The sweet peppers were harvested at the end of 60 days after plantation. The results were evaluated and shown in Table 12.

Table 12. The effect of γ-PGA fermentation broth containing 3.5% γ-PGA (Na⁺ form) on the growth of sweet pepper.

| | Appearance | Average size* in horizontal diameter cm | Average sweetness of juices Brix$^0$ | Average yield per 100M$^2$, % |
|---|---|---|---|---|
| Lot A(control) | Smooth/shining | 8.3cm | 9.3 | 100% |
| Lot B(test) | Smooth/shining | 10.2cm | 10.7 | 122% |
| % increase, 100% x (B-A)/A | | 23.8% | 15.1% | 22% |
| Note: * ---Average size of 10 random samples of sweet peppers. | | | | |

## EXPERIMENTAL EXAMPLE 9

**Study on the growth of Astragalus Membranaceus in an open agricultural field in a Taichung Agricultural Station:**

In a similar open field study as shown in Experimental Example 7, the ancient oriental medicinal herbal Astragalus Membranaceus was used in stead of Diana watermelon. I week old Astragalus Membranaceus young plants were used. The soil was first fertilized with an organic fertilizer Champion 280 (12-8-10) enriched with 2% soluble magnesium. After the young plants were planted, 2 holes with 1.5 inches diameter and 10 cm depth were drilled around the sides of the plants at 20cm away from the plants for later addition of extra fertilizer and the γ-PGA fermentation broth containing 3.5% γ-PGA (Na⁺ form). The 2 holes were located at sides of the plants opposite to each other. Two additional fertilizers were added at 24day intervals after planting the young plants. For each addition of the fertilizers, Taiwan Fertilizer organic No. 39 (12-18-12) was used at 60g/per hole together with 500 ml of the 300 times diluted γ-PGA fermentation broth containing 3.5% γ -PGA (Na⁺ form). At the end of 96 days, the Astragalus Membranaceus trees were harvested and the roots were collected and washed The fresh roots and leafs were evaluated and the results were shown in Table 13.

Table 13. The effect of γ-PGA fermentation broth containing 3.5% γ-PGA (Na⁺ form) on the growth of Astragalus Membranaceus.

| | Average leaf Length* cm | Average Root length* cm | Average main root diameter* cm | Average small root number* | Main root color |
|---|---|---|---|---|---|
| Lot A(control) | 11.5 | 18.5 | 1.45 | 10 | Bright white |
| Lot B(test) | 16.6 | 26.8 | 2.17 | 15 | Bright white |
| % increase, 100%x(B-A)/A | 44.3% | 44.8% | 49.6% | 50% | |

## Claims

1. A method for improving the suppression of a phytopathogenic disease, which method comprises applying a material comprising γ-polyglutamic acid ("γ-PGA," H form) and/or its salt, a γ-polyglutamate hydrogel, a fermentation broth comprising γ-PGA, its salt and/or a γ-polyglutamate hydrogel, or a mixture thereof to the crop, plant, or seeds, or to a field for growing the crop, plant or seed.

2. A method of claim 1, wherein the salt is γ-polyglutamate in Na⁺ form, γ-polyglutamate in K⁺ form, γ-polyglutamate

in $NH_4^+$ form, $\gamma$-polyglutamate in $Mg^{++}$ form, or $\gamma$-polyglutamate in $Ca^{++}$ form.

3. A method of claim 1, wherein the $\gamma$-polyglutamate hydrogel is prepared from $\gamma$-polyglutamate in $Na^+$ form, $\gamma$-polyglutamate in $K^+$ form, $\gamma$-polyglutamate in $NH_4^+$ form, $\gamma$-polyglutamate in $Mg^{++}$ form or $\gamma$-polyglutamate in $Ca^{++}$ form, or a mixture thereof, cross-linked with diglycerol polyglycidyl ether, polyglycerol polyglycidyl ether, sorbitol polyglycidyl ether, polyoxyethylene sorbitol polyglycidyl ether, polysorbitol polyglycidyl ether, or polyethylene glycol diglycidyl ether, or a mixture thereof.

4. A method of claim 1, wherein the $\gamma$-polyglutamate hydrogel is prepared from $\gamma$-polyglutamate in $Na^+$ form, $\gamma$-polyglutamate in $K^+$ form, $\gamma$-polyglutamate in $NH_4^+$ form, $\gamma$-polyglutamate in $Mg^{++}$ form or $\gamma$-polyglutamate in $Ca^{++}$ form, or a mixture thereof, cross-linked by irradiation with gamma ray or electron beams.

5. A method of any one of the preceding claims, wherein the material is used as a biocide, a moisturizer for soil conditioning and renovation, a growth stimulant for spraying on the plant leaf, or for irrigating the crop or plant field, a chelating agent for removing a heavy metal present in the field for growing the crop, plant, or seed, and/or a complexing agent for forming soluble calcium and/or magnesium.

6. A method of claim 5, wherein the material is coated on the seed.

7. A method for enhancing the growth of a crop, a plant, or a seed, simultaneously strengthening a plant stem and/or trunk, and/or increasing the yield of a crop, which method comprises applying a material comprising a $\gamma$-polyglutamate hydrogel, a fermentation broth comprising a $\gamma$-polyglutamate hydrogel, or a mixture thereof to the crop, plant, or seeds, or to a field for growing the crop, plant or seed, wherein the $\gamma$-polyglutamate hydrogel is prepared from $\gamma$-polyglutamate in $Na^+$ form, $\gamma$-polyglutamate in $K^+$ form, $\gamma$-polyglutamate in $NH_4^+$ form, $\gamma$-polyglutamate in $Mg^{++}$ form, or $\gamma$-polyglutamate in $Ca^{++}$ form, or a mixture thereof, cross-linked with diglycerol polyglycidyl ether, polyglycerol polyglycidyl ether, sorbitol polyglycidyl ether, polyoxyethylene sorbitol polyglycidyl ether, polysorbitol polyglycidyl ether, or polyethylene glycol diglycidyl ether, or a mixture thereof.

8. A method of claim 7, wherein the material further comprises $\gamma$-PGA and/or its salt.

9. A method of claim 8, wherein the salt is $\gamma$-polyglutamate in $Na^+$ form, $\gamma$-polyglutamate in $K^+$ form, $\gamma$-polyglutamate in $NH_4^+$ form, $\gamma$-polyglutamate in $Mg^{++}$ form, or $\gamma$-polyglutamate in $Ca^{++}$ form.

10. A method of any one of claims 7 to 9, wherein the material is used as a moisturizer for soil conditioning and renovation, a growth stimulant for spraying on the plant leaf, or for irrigating the crop or plant field, a chelating agent for removing a heavy metal present in the field for growing the crop, plant, or seed, and/or a complexing agent for forming soluble calcium and/or magnesium.

11. A method of claim 10, wherein the material is coated on the seed.

12. A method of any one of claims 1 to 6 and 8 to 11, wherein the material is dissolved in a polar solvent or water and the pH is adjusted to a value in the range of from 5.0 to 8.0.

13. A method of claim 12, wherein the concentration of $\gamma$-PGA and/or its salt is in the range of from 0.001 % to 15%.

14. A method of claim 12, wherein the concentration of the $\gamma$-polyglutamate hydrogel in the range of from 0.001% to 10%.

15. A method of any one of the preceding claims, wherein the material has a ratio of D-form glutamic acid and/or glutamate to L-form glutamic acid and/or glutamate of from 90%:10% to 10%:90%.

16. A method of claim 15, wherein the ratio is from 65%:35% to 35%:65%.


**Patentansprüche**

1. Verfahren zur Verbesserung der Unterdrückung einer phytopathogenen Krankheit, wobei das Verfahren das Anwenden eines Materials, das $\gamma$-Polyglutaminsäure ("$\gamma$-PGA", H-Form) und/oder deren Salz, ein $\gamma$-Polyglutamathydrogel, eine Fermentationsbrühe, die $\gamma$-PGA, deren Salz und/oder ein $\gamma$-Polyglutamathydrogel umfasst, oder ein Gemisch davon umfasst, auf eine Feldfrucht, eine Pflanze oder eine Saat oder auf ein Feld, auf dem die Feldfrucht, die Pflanze oder die Saat wächst, umfasst.

2. Verfahren nach Anspruch 1, bei dem das Salz γ-Polyglutamat in Na$^+$-Form, γ-Polyglutamat in K$^+$-Form, γ-Polyglutamat in NH$_4$$^+$-Form, γ-Polyglutamat in Mg$^{++}$-Form oder γ-Polyglutamat in Ca$^{++}$-Form ist.

3. Verfahren nach Anspruch 1, bei dem das γ-Polyglutamathydrogel aus γ-Polyglutamat in Na$^+$-Form, γ-Polyglutamat in K$^+$-Form, γ-Polyglutamat in NH$_4$$^+$-Form, γ-Polyglutamat in Mg$^{++}$-Form oder γ-Polyglutamat in Ca$^{++}$-Form oder einem Gemisch davon, das mit Diglycerinpolyglycidylether, Polyglycerinpolyglycidylether, Sorbitpolyglycidylether, Polyoxyethylensorbitpolyglycidylether, Polysorbitpolyglycidylether oder Polyethylenglykoldiglycidylether oder einem Gemisch davon vernetzt wird, hergestellt wird.

4. Verfahren nach Anspruch 1, bei dem das γ-Polyglutamathydrogel aus γ-Polyglutamat in Na$^+$-Form, γ-Polyglutamat in K$^+$-Form, γ-Polyglutamat in NH$_4$$^+$-Form, γ-Polyglutamat in Mg$^{++}$-Form oder γ-Polyglutamat in Ca$^{++}$-Form oder einem Gemisch davon, das durch eine Bestrahlung mit Gammastrahlen oder Elektronenstrahlen vernetzt wird, hergestellt wird.

5. Verfahren nach einem der vorhergehenden Ansprüche, bei dem das Material als Biozid, ein Feuchthaltemittel für die Bodenkonditionierung und -erneuerung, als Wachstumsstimulationsmittel zum Sprühen auf Pflanzenblätter oder zum Bewässern des Feldfrucht- oder Pflanzenfelds, als Chelatisierungsmittel zum Entfernen eines Schwermetalls, das in dem Feld vorliegt, auf dem die Feldfrucht, die Pflanze oder die Saat wächst, und/oder als Komplexierungsmittel zur Bildung von löslichem Calcium und/oder Magnesium verwendet wird.

6. Verfahren nach Anspruch 5, bei dem das Material auf die Saat aufgebracht wird.

7. Verfahren zur Verbesserung des Wachstums einer Feldfrucht, einer Pflanze oder einer Saat, wobei gleichzeitig ein Pflanzenstängel und/oder -stamm verstärkt wird und/oder die Ausbeute einer Feldfrucht erhöht wird, wobei das Verfahren das Anwenden eines Materials, das ein γ-Polyglutamathydrogel, eine Fermentationsbrühe, die ein γ-Polyglutamathydrogel umfasst, oder ein Gemisch davon umfasst, auf die Feldfrucht, die Pflanze oder die Saat oder auf ein Feld, auf dem die Feldfrucht, die Pflanze oder die Saat wächst, umfasst, wobei das γ-Polyglutamathydrogel aus γ-Polyglutamat in Na$^+$-Form, γ-Polyglutamat in K$^+$-Form, γ-Polyglutamat in NH$_4$$^+$-Form, γ-Polyglutamat in Mg$^{++}$-Form oder γ-Polyglutamat in Ca$^{++}$-Form oder einem Gemisch davon, das mit Diglycerinpolyglycidylether, Polyglycerinpolyglycidylether, Sorbitpolyglycidylether, Polyoxyethylensorbitpolyglycidylether, Polysorbitpolyglycidylether oder Polyethylenglykoldiglycidylether oder einem Gemisch davon vernetzt wird, hergestellt wird.

8. Verfahren nach Anspruch 7, bei dem das Material ferner γ-PGA und/oder deren Salz umfasst.

9. Verfahren nach Anspruch 8, bei dem das Salz γ-Polyglutamat in Na$^+$-Form, γ-Polyglutamat in K$^+$-Form, γ-Polyglutamat in NH$_4$$^+$-Form, γ-Polyglutamat in Mg$^{++}$-Form oder γ-Polyglutamat in Ca$^{++}$-Form ist.

10. Verfahren nach einem der Ansprüche 7 bis 9, bei dem das Material als Feuchthaltemittel für die Bodenkonditionierung und -erneuerung, als Wachstumsstimulationsmittel zum Sprühen auf Pflanzenblätter oder zum Bewässern des Feldfrucht- oder Pflanzenfelds, als Chelatisierungsmittel zum Entfernen eines Schwermetalls, das in dem Feld vorliegt, auf dem die Feldfrucht, die Pflanze oder die Saat wächst, und/oder als Komplexierungsmittel zur Bildung von löslichem Calcium und/oder Magnesium verwendet wird.

11. Verfahren nach Anspruch 10, bei dem das Material auf die Saat aufgebracht wird.

12. Verfahren nach einem der Ansprüche 1 bis 6 und 8 bis 11, bei dem das Material in einem polaren Lösungsmittel oder Wasser gelöst wird und der pH-Wert auf einen Wert im Bereich von 5,0 bis 8,0 eingestellt wird.

13. Verfahren nach Anspruch 12, bei dem die Konzentration von γ-PGA und/oder deren Salz im Bereich von 0,001 % bis 15 % liegt.

14. Verfahren nach Anspruch 12, bei dem die Konzentration des γ-Polyglutamathydrogels im Bereich von 0,001 % bis 10 % liegt.

15. Verfahren nach einem der vorhergehenden Ansprüche, bei dem das Material ein Verhältnis von Glutaminsäure und/oder Glutamat in D-Form zu Glutaminsäure und/oder Glutamat in L-Form von 90 %:10 % bis 10 %:90 % aufweist.

16. Verfahren nach Anspruch 15, bei dem das Verhältnis von 65 %:35 % bis 35 %:65 % beträgt.

**Revendications**

1. Procédé d'amélioration de la suppression d'une maladie phytopathogène, ledit procédé comprenant l'application d'un matériau comprenant de l'acide $\gamma$-polyglutamique (« $\gamma$-PGA », forme H) et/ou son sel, un hydrogel de $\gamma$-polyglutamate, un bouillon de fermentation comprenant du $\gamma$-PGA, son sel et/ou un hydrogel de $\gamma$-polyglutamate, ou un mélange de ceux-ci, à la culture, à la plante, ou aux graines, ou à un champ pour la croissance de la culture, de la plante ou de la graine.

2. Procédé selon la revendication 1, dans lequel le sel est un $\gamma$-polyglutamate sous la forme $Na^+$, un $\gamma$-polyglutamate sous la forme $K^+$, un $\gamma$-polyglutamate sous la forme $NH_4^+$, un $\gamma$-polyglutamate sous la forme $Mg^{++}$ ou un $\gamma$-polyglutamate sous la forme $Ca^{++}$.

3. Procédé selon la revendication 1, dans lequel l'hydrogel de y-polyglutamate est préparé à partir de $\gamma$-polyglutamate sous la forme $Na^+$, de $\gamma$-polyglutamate sous la forme $K^+$, de $\gamma$-polyglutamate sous la forme $NH_4^+$, de $\gamma$-polyglutamate sous la forme $Mg^{++}$ ou de $\gamma$-polyglutamate sous la forme $Ca^{++}$ ou d'un mélange de ceux-ci, réticulé avec du diglycérol polyglycidyl éther, du polyglycérol polyglycidyl éther, du sorbitol polyglycidyl éther, du polyoxyéthylène sorbitol polyglycidyl éther, du polysorbitol polyglycidyl éther ou du polyéthylène glycol diglycidyl éther, ou un mélange de ceux-ci.

4. Procédé selon la revendication 1, dans lequel l'hydrogel de $\gamma$-polyglutamate est préparé à partir d'un $\gamma$-polyglutamate sous la forme $Na^+$, d'un $\gamma$-polyglutamate sous la forme $K^+$, d'un $\gamma$-polyglutamate sous la forme $NH_4^+$, d'un $\gamma$-polyglutamate sous la forme $Mg^{++}$ ou d'un $\gamma$-polyglutamate sous la forme $Ca^{++}$ ou d'un mélange de ceux-ci, réticulé par rayonnement avec des rayons gamma ou des faisceaux d'électrons.

5. Procédé selon l'une quelconque des revendications précédentes, dans lequel le matériau est utilisé comme biocide, comme élément hydratant pour l'amendement et la rénovation du sol, comme stimulant de croissance à vaporiser sur les feuilles de la plante, ou pour irriguer la culture ou le champ, comme agent chélatant pour éliminer un métal lourd présent dans le champ pour la croissance de la culture, de la plante ou de la graine, et/ou comme agent complexant pour la formation de calcium et/ou de magnésium soluble.

6. Procédé selon la revendication 5, dans lequel le matériau est revêtu sur la graine.

7. Procédé d'amélioration de la croissance d'une culture, d'une plante, ou d'une graine, en renforçant simultanément une tige et/ou un tronc de plante, et/ou en augmentant le rendement d'une culture, ledit procédé comprenant l'application d'un matériau comprenant un hydrogel de $\gamma$-polyglutamate, un bouillon de fermentation comprenant un hydrogel de $\gamma$-polyglutamate, ou un mélange de ceux-ci, à la culture, à la plante, ou aux graines, ou à un champ pour la croissance de la culture, de la plante ou de la graine, dans lequel l'hydrogel de $\gamma$-polyglutamate est préparé à partir de $\gamma$-polyglutamate sous la forme $Na^+$, de $\gamma$-polyglutamate sous la forme $K^+$, de $\gamma$-polyglutamate sous la forme $NH_4^+$, de $\gamma$-polyglutamate sous la forme $Mg^{++}$ ou de $\gamma$-polyglutamate sous la forme $Ca^{++}$ ou d'un mélange de ceux-ci, réticulé avec du diglycérol polyglycidyl éther, du polyglycérol polyglycidyl éther, du sorbitol polyglycidyl éther, du polyoxyéthylène sorbitol polyglycidyl éther, du polysorbitol polyglycidyl éther ou du polyéthylène glycol diglycidyl éther, ou un mélange de ceux-ci.

8. Procédé selon la revendication 7, dans lequel le matériau comprend en outre du $\gamma$-PGA et/ou son sel.

9. Procédé selon la revendication 8, dans lequel le sel est un $\gamma$-polyglutamate sous la forme $Na^+$, un $\gamma$-polyglutamate sous la forme $K^+$, un $\gamma$-polyglutamate sous la forme $NH_4^+$, un $\gamma$-polyglutamate sous la forme $Mg^{++}$ ou un $\gamma$-polyglutamate sous la forme $Ca^{++}$.

10. Procédé selon l'une quelconque des revendications 7 à 9, dans lequel le matériau est utilisé comme élément hydratant pour l'amendement et la rénovation du sol, comme stimulant de croissance à vaporiser sur les feuilles de la plante, ou pour irriguer la culture ou le champ, comme agent chélatant pour éliminer un métal lourd présent dans le champ pour la croissance de la culture, de la plante ou de la graine, et/ou comme agent complexant pour former du calcium et/ou du magnésium soluble.

**11.** Procédé selon la revendication 10, dans lequel le matériau est revêtu sur la graine.

**12.** Procédé selon l'une quelconque des revendications 1 à 6 et 8 à 11, dans lequel le matériau est dissous dans un solvant polaire ou de l'eau et le pH est ajusté à une valeur comprise dans la plage de 5,0 à 8,0.

**13.** Procédé selon la revendication 12, dans lequel la concentration de γ-PGA et/ou de son sel est dans la plage de 0,001 % à 15 %.

**14.** Procédé selon la revendication 12, dans lequel la concentration de l'hydrogel de γ-polyglutamate est dans la plage de 0,001 % à 10 %.

**15.** Procédé selon l'une quelconque des revendications précédentes, dans lequel le matériau a un rapport entre l'acide glutamique et/ou le glutamate sous forme D et l'acide glutamique et/ou le glutamate sous forme L allant de 90 %:10 % à 10 %:90 %.

**16.** Procédé selon la revendication 15, dans lequel le rapport va de 65 %:35 % à 35 %:65 %.

γ - poly - glutamic acid (or γ-PGA)

Repeating unit of M(I) γ - poly - (L) - glutamate
[M(I) γ - (L) - PGA]

Repeating unit of M(II)$_{1/2}$ γ-poly - (D) - glutamate
[M(II)$_{1/2}$ γ - (D) - PGA]

Figure 1. The chemical structure of γ-polyglutamic acid(γ-PGA) and the salts of γ-PGA. A---the acidified form of γ-PGA, B--- the M(I) γ-PGA, C---the the M(II)$_{1/2}$ γ-PGA, where M(I) = K$^+$, Na$^+$, or NH$_4$$^+$; M(II) = Ca$^{++}$, or Mg$^{++}$.

Figure 2. 400 MHz $^1$1H-NMR spectrum of M$^+$ $\gamma$-polyglutamate in D$_2$O at neutral pH and
temperature 30°C. Chemical shift was measured in ppm units from the internal
standard. A—sodium $\gamma$-polyglutamate, B—potassium $\gamma$-polyglutamate,
C—ammonium $\gamma$-polyglutamate. X indicates impurity peak.

Figure 3. $^{13}$C-NMR spectra (67.9 MHz) of γ-polyglutamates in D$_2$O at neutral pH and temperature 30°C. Chemical shift was measurement in ppm units relative to the internal reference. A—potassium γ-polyglutamate, B—sodium γ-polyglutamate, C—calcium γ-polyglutamate, D—magnesium γ-polyglutamate.

Fifure. 4.  Infrared (FT-IR) absorption spectra of γ-polyglutamtes in KBr pellet.

A—Sodium γ-polyglutamate, B—ammonium γ-polyglutamate.

Figure 5. pH-titration curve of γ-(D,L)-PGA at 25°C
    A-10%γ-PGA with 0.2N NaOH, B-2%γ-PGA with Ca(OH)₂,
    C-4%γ-PGA with 5N NH₄OH

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002305975 A

### Non-patent literature cited in the description

- **SCHLEIFER K. H. ; KANDLER O.** Peptidoglycan types of bacterial cell walls and their taxonomic implications. *Bacteriolo. Rev.,* 1972, vol. 36, 407-477
- **ASSELINEAU J.** The bacterial lipids. Harmann, 1966
- **BYCROFT B. W.** Structural relationships in microbial peptides. *Nature (London),* 1969, vol. 224, 595-597
- **HATFIELD G. M.** *Toxins of higher fungi,* 1975, vol. 38, 36-55
- **SENGUPTA S. ; BANERJEE A. B. ; BOSE S. K.** $\gamma$-Glutamyl and D- or L-peptide linkages in mycobacillin, a cyclic peptide antibiotic. *Biochem. J.,* 1971, vol. 121, 839-846
- **ARIMA K. ; KAKINUMS A. ; TAMURA, G.** Surfactin, a Crystalline Peptidelipid Surfactant Produced by Bacillus subtilis: Isolation, Characterization and Its Inhibition of Fibrin Clot Formation. *Biochem. Biophys. Res. Commun,* 1968, vol. 31, 488-494
- **CARRASCO L.** Entry of animal viruses and macromolecules into cells. *FEBS Lett.,* 1994, vol. 350, 151-154
- **NARUSE N. ; TENMYO O. ; KOBARU S.** Pumilacidin, a complex of new antiviral antibiotics: Production, isolation, chemical properties, structure and biological activity. *J. Antibiot.,* 1990, vol. 43, 267-280
- **VOLLENBROICH D. ; PAUL G. ; OZEL M. ; VATER J.** Antimycoplasma properties and application on cell cultures of surfactin, a lipopeptide antibiotic from Bacillus subtilis. *Appl. Environ. Microbiol.,* 1997, vol. 63, 44-49
- **PEYPOUX F. ; GUINAND M. ; MICHEL G. ; DELCAMBE L. ; DAS B. C. ; LEDERER E.** Structure of iturin A, a peptidolipid antibiotic from Bacillus subtilis. *Biochemistry,* 1978, vol. 17, 3992-3996

- **NAMAI T. ; HATAKEDA K. ; ASANO T.** Identification of a bacterium which produces substances having antifungal activity against many important phytopathogenic fungi. *Tohoku J. Agric. Res.,* 1985, vol. 36, 1-7
- **GUELDNER R. C. ; REILEY C. C. ; PUSEY P. L. ; COSTELLO C. E. ; ARRENDALE R. F. ; COX R. H. ; HIMMELSBACH D. S. ; CRUMLEY F. G. ; CUTLER H. G.** Isolation and identification of iturin as antifungal peptides in biological control of peach brown rot with Bacillus subtilis. *J. Agric. Food Chem.,* 1987, vol. 36, 366-370
- *FEMS MICROBIOLOGY LETTERS,* 2003, vol. 218 (1), 39-45
- **KUBOTA H. et al.** Production of poly $\gamma$-glutamic acid) by Bacillus subtilis F-2-01. *Biosci. Biotech. Biochem,* 1993, vol. 57 (7), 1212-1213
- **OGATA Y. et al.** Efficient production of $\gamma$-polyglutamic acid by Bacillus subtilis (natto) in jar fermentation. *Biosci. Biotech. Biochem.,* 1997, vol. 61 (10), 1684-1687
- **HO, G. H.** $\gamma$-Polyglutamic acid produced by Bacillus subtilis var. natto: Structural characteristics and its industrial application. *Bioindustry,* 2005, vol. 16 (3), 172-182
- **RYDON H. N.** Polypeptides, Part X, The optical rotary dispersion of poly $\gamma$-D-glutamic acid. *J. Chem. Soc.,* 1964, 1928-1933
- **NARUSE N. ; TENMYO O. ; KOBARU S.** Pumilacidin, a complex of new antiviral antibiotics: Production, isolation, chemical properties, structure and biological activity. *J. Antibiot,* 1990, vol. 43, 267-280